# EUROPÄISCHE PATENTSCHRIFT

(11) **EP 2 691 618 B1**
(45) Veröffentlichungstag und Bekanntmachung des Hinweises auf die Patenterteilung: **19.08.2015**
(21) Anmeldenummer: 12715879.8
(22) Anmeldetag: 30.03.2012
(51) Int. Cl.: F01N 3/20, F01N 1/08

(54) **KOMPAKTE ABGASBEHANDLUNGSEINHEIT MIT MISCHBEREICH UND VERFAHREN ZUR VERMISCHUNG EINES ABGASES**
COMPACT EXHAUST-GAS TREATMENT UNIT WITH MIXING REGION, AND METHOD FOR MIXING AN EXHAUST GAS
UNITÉ DE TRAITEMENT DE GAZ D'ÉCHAPPEMENT COMPACTE COMPRENANT UNE ZONE DE MÉLANGE ET PROCÉDÉ POUR MÉLANGER DES GAZ D'ÉCHAPPEMENT

(30) Priorität: 30.03.2011 DE 102011015512
(43) Veröffentlichungstag der Anmeldung: 05.02.2014
(73) Patentinhaber: Emitec Gesellschaft für Emissionstechnologie mbH, 53797 Lohmar (DE)
(72) Erfinder: BEYER, Sebastian, 88074 Meckenbeuren (DE); DANCKERT, Bernd, 88074 Meckenbeuren (DE); ENDER, Martin, Walter, I-10138 Torino (IT); VOGEL, Samuel, 88339 Bad Waldsee (DE)
(74) Vertreter: Rössler, Matthias
(86) Internationale Anmeldenummer: PCT/EP2012/055800
(87) Internationale Veröffentlichungsnummer: WO 2012/131042

(56) Entgegenhaltungen:
- WO-A1-90/12950
- WO-A1-97/01387
- DE-A1- 2 123 532
- DE-A1-102010 021 438

## Beschreibung

Gegenstand der Erfindung ist eine kompakte Abgasbehandlungseinheit, in der eine Vermischung des Abgases erfolgt, und ein Verfahren zur Vermischung des Abgases. Die Vermischung des Abgases erfolgt insbesondere zusammen mit einer Behandlung des Abgases mit einem Additiv bzw. Reaktionsmittel.

Aufgrund des stetig steigenden Verkehrs und/oder der strenger werdenden Abgasnormen ist es für Fahrzeuge mit einer Verbrennungskraftmaschine wichtig, dass die Abgase der Verbrennungskraftmaschine effizient gereinigt werden. Dazu sind aus dem Stand der Technik Abgasreinigungssysteme bekannt, bei welchen das Abgas der Vexbrennungskraft-maschine an einer katalytisch wirksamen Oberfläche vorbeigeführt wird und Schadstoffe im Abgas wie Stickstoffoxidverbindungen, Rußpartikel, Kohlenmonoxid, Kohlenwasserstoffe etc. unter Beihilfe eines an dieser Oberfläche angelagerten Katalysatormaterials zu Substanzen wie Stickstoff, Wasser und Kohlendioxid umgesetzt werden. Für die effiziente Umsetzung von Abgasen sind regelmäßig verhältnismäßig hohe Abgastemperaturen erforderlich. Die Temperatur der Abgase einer Verbrennungkraftmaschine sind regelmäßig direkt nachdem die Abgase die Verbrennungskraftmaschine verlassen haben am höchsten, so dass hier in der Nähe der Verbrennungskraftmaschine (z. B. im Motorraum eines Fahrzeugs) ein günstiger Ort ist, ein Abgasreinigungssystem anzuordnen. Allerdings ist der Bauraum in der Motornähe bei Fahrzeugen aller Art regelmäßig begrenzt.

Um den begrenzten Bauraum im Motorraum trotzdem für Abgasreinigungssysteme nutzen zu können, sind besonders kompakte Abgasbehandlungseinheiten mit konzentrischer Durchströmung entwickelt worden, welche bspw. aus der DE 103 01 138 A1 bekannt sind. Bei einem solchen Abgasreinigungssystem durchströmt das Abgas zunächst einen konzentrisch angeordneten Hinströmbereich, wird dann umgelenkt und strömt durch einen äußeren Rückströmbereich zurück. Der Rückströmbereich umgibt dabei den Hinströmbereich auf dessen Außenseite, so dass ein effizienter Wärmeaustausch zwischen Hinströmbereich und im Rückströmbereich erfolgt. Im Hinströmbereich und Rückströmbereich können dabei zusätzlich katalytisch wirksame Oberflächen angeordnet sein, so dass die Abgase regelmäßig zusätzlich durch entsprechend ablaufende katalytische Reaktionen erwärmt werden. Durch den effizienten Wärmeaustausch zwischen Hinströmbereich und Rückströmbereich kann so die Abgastemperatur im Abgassystem erhöht bzw. hoch gehalten werden, so dass eine besonders effiziente Umsetzung der Schadstoffe erfolgt. Gleichzeitig wird durch die Aufteilung des Abgassystems in Hinströmbereich, Umlenkbereich und Rückströmbereich eine besonders kompakte Anordnung des Abgasreinigungssystems erreicht, so dass die Anordnung des Systems im Motorraum bzw. in der Nähe der Verbrennungskraftmaschine erfolgen kann.

Bei derartigen Abgasreinigungssystemen ist es gegebenenfalls auch vorgesehen, ein Reaktionsmittel zum Abgas hinzuzugeben. Dieses Reaktionsmittel umfasst z. B. zumindest eines von Kohlenwasserstoff, Reduktionsmittel oder Reduktionsmittelvorläufer (insbesondere flüssige Harnstoff-Wasser-Lösung). Das Reaktionsmittel trägt dazu bei, Schadstoffe im Abgas, insbesondere im Zusammenspiel mit speziell dafür vorgesehenen Beschichtungen, in harmlose Komponenten umzuwandeln. Derartige Zugabeeinheiten für diese Reaktionsmittel sind dabei so angeordnet, dass eine möglichst optimale Verteilung im Abgas bzw. ein hoher Verdampfungsgrad des zugeführten Reaktionsmittels erreicht wird. Dabei wird das Reaktionsmittel in Strömungsrichtung oder entgegen der Strömungsrichtung des Abgases z. B. direkt auf einen Wabenkörper aufgebracht, so dass durch das Auftreffen des Reaktionsmittels auf den (heißen) Wabenkörper die Verdampfung durch das Auftreffen gefördert und eine feine Verteilung der Reaktionsmitteltropfen sowie ggf. eine Speicherung des Reaktionsmittels in der Struktur oder in der Beschichtung des Wabenkörpers erreicht wird. Dieses Aufbringen des Reaktionsmittels auf einen Wabenkörper kann jedoch auch dazu führen, dass die Beschichtung des Wabenkörpers z. B. durch Wasserschlag oder durch den Temperaturunterschied zwischen Wabenkörper und Reaktionsmittel beschädigt wird.

Eine optimale Verteilung des Reaktionsmittels im Abgas ist erwünscht, weil so eine besonders effiziente Umsetzung von Schadstoffen im gesamten Strömungsquerschnitt erreicht wird. Insbesondere ist eine solche Durchmischung daher vor dem Durchströmen einer Abgasbehandlungsvorrichtung (z. B. eines Katalysators oder ähnlichem) sinnvoll, so dass alle Bereiche der Abgasbehandlungsvorrichtung gleichmäßig mit dem Reaktionsmittel beaufschlagt werden können. Sobald das Abgas in die Abgasbehandlungsvorrichtung eingetreten ist, die regelmäßig Kanäle aufweist, erfolgt nur noch eine ungenügende Aufteilung des Abgases über den gesamten Durchströmungsquerschnitt der Abgasbehandlungsvorrichtung. Aus diesem Grund sollte der Vermischungsgrad von Reaktionsmittel und Abgas bereits vor dem Eintritt in eine Abgasbehandlungsvorrichtung so groß sein, dass eine gleichmäßige Beaufschlagung der katalytisch aktiven Flächen der Abgasbehandlungsvorrichtung durch das Reaktionsmittel möglich ist.

Diese Vermischung des Abgases ist insbesondere auch ohne Zugabe eines Reaktionsmittels vorteilhaft. Die Schadstoffe im Abgas liegen ebenfalls nicht gleichmäßig verteilt über den Querschnitt der Abgasleitung vor. Auch hier führt eine zusätzliche Vermischung (nur) des Abgases dazu, dass die Schadstoffe und andere Bestandteile des Abgases, z. B. Stickstoffdioxid oder unverbrannte Kohlenwasserstoffe, gleichmäßig verteilt werden. Somit wird auch eine stromabwärts angeordnete Abgasbehandlungsvorrichtung derart vom Abgas beaufschlagt, dass das Abgas über den gesamten Querschnitt der Abgasbehandlungsvorrichtung eine möglichst gleiche Zusammensetzung aufweist.

Die WO-A1-90/12950 ist auf einen Dieselrußfilter gerichtet, der in einem Schalldämpfergehäuse angeordnet ist. Dabei erstreckt sich ein Abgaskanal in den Schalldämpfer, in dem das Abgas mehrfach in seiner Strömungsrichtung umgelenkt wird. Das Abgas tritt über Verteileröffnungen aus dem Abgaskanal aus und wird dann umgelenkt. Eine Kollision von Teilströmen ist dort nicht vorgesehen.

Die DE-A1-21 23 532 betrifft einen radial durchströmten, rohrförmigen Neutralisator für Abgase mit einem Gehäuse. Dieser katalytische Reaktor besteht aus zwei gelochten konzentrisch angeordneten Zylindern, zwischen denen sich ein granulierter Katalysator befindet. Abgas strömt in den inneren Zylinder und durch Öffnungen in dessen Innenumfangsfläche weiter in den katalytischen Reaktor. Über die gesamte Außenumfangsfläche des äußeren Zylinders tritt das Abgas in einen ringförmigen Raum zwischen dem Reaktor und dem Gehäuse aus.

Aus WO-A1-97/01387 sind ein Verfahren und eine Einrichtung zum katalytischen Reinigen von Abgas bekannt. Bei der Abgasbehandlungsvorrichtung wird das Abgas in einen zentralen Mischkanal eingeleitet. An dem anderen Ende des Mischkanals wird das Abgas nach radial außen umgelenkt und strömt nachfolgend in Gegenrichtung durch einen ringförmigen Reaktionskanal zurück.

Hiervon ausgehend ist es Aufgabe der hier vorliegenden Erfindung, die im Zusammenhang mit dem Stand der Technik geschilderten technischen Probleme zumindest teilweise zu lösen. Es soll insbesondere eine Abgasbehandlungseinheit angegeben werden, die einerseits einen kompakten Aufbau gewährleistet und andererseits einen besonders hohen Durchmischungsgrad des Abgases (insbesondere mit einem Reaktionsmittel) ermöglicht. Gleichzeitig soll ein entsprechendes Verfahren zur Vermischung des Abgases angegeben werden.

Diese Aufgaben werden gelöst mit einer Abgasbehandlungseinheit gemäß den Merkmalen des Patentanspruchs 1 und durch ein Verfahren zur Vermischung eines Abgases gemäß den Merkmalen des Patentanspruchs 7. Vorteilhafte Ausgestaltungen der erfindungsgemäßen Abgasbehandlungseinheit und des erfindungsgemäßen Verfahrens, bzw. deren Anordnung und Nutzung in einem Fahrzeug sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombinierbar sind und weitere Ausgestaltungen der Erfindung aufzeigen. Die Beschreibung, insbesondere im Zusammenhang mit den Figuren, erläutert die Erfindung weiter und führt ergänzende Ausführungsbeispiele der Erfindung an.

Die erfindungsgemäße Abgasbehandlungseinheit weist zumindest ein Gehäuse mit einer ersten Stirnseite und einer gegenüberliegend angeordneten zweiten Stirnseite auf sowie ein sich von der ersten Stirnseite zur zweiten Stirnseite erstreckendes Rohr als Hinströmbereich für ein Abgas auf. Weiterhin weist die Abgasbehandlungseinheit einen Umlenkbereich im Bereich der zweiten Stirnseite für das Abgas auf und einen sich zwischen Rohr und Gehäuse erstreckenden Rückströmbereich. Das Rohr weist benachbart zur zweiten Stirnseite einen Austrittsbereich auf, aus dem ein erster Abgasteilstrom in den Umlenkbereich strömt, wobei das Rohr im Umlenkbereich und stromaufwärts des Austrittsbereichs mindestens eine seitliche Öffnung aufweist, so dass der erste Abgasteilstrom im Umlenkbereich mit mindestens einem, aus der mindestens einen Öffnung strömenden, zweiten Abgasteilstrom kollidiert.

Das Abgas strömt ausgehend von der Verbrennungskraftmaschine durch eine Abgasleitung hin zu der Abgasbehandlungseinheit und tritt in diese über die erste Stirnseite in den Hinströmbereich ein. Im hinteren, stromabwärts gelegenen Bereich des Hinströmbereichs bzw. des Rohrs wird das Abgas in zumindest einen ersten Abgasteilstrom und einen zweiten Abgasteilstrom aufgeteilt. Der zweite Abgasteilstrom tritt über mindestens eine seitliche Öffnung im Rohr in den Umlenkbereich ein. Der erste Abgasteilstrom strömt an der wenigstens einen seitlichen Öffnung vorbei und verlässt das Rohr aus einem benachbart zur zweiten Stirnseite angeordneten Austrittsbereich. Aus dem Austrittsbereich tritt der erste Abgasteilstrom in den Umlenkbereich ein und wird dort so umgelenkt, dass er im Wesentlichen in Richtung des Rückströmbereichs strömt, also insbesondere entgegengesetzt zur Strömungsrichtung des Abgases im Hinströmbereich. Der aus dem Austrittsbereich ausgetretene erste Abgasteilstrom trifft nun im Umlenkbereich, auf dem Weg hin zum Rückströmbereich, auf den mindestens einen zweiten Abgasteilstrom, der aus der mindestens einen seitlichen Öffnung des Rohrs austritt. Diese Kollision der nicht gleichgerichteten Abgasteilströme fördert nun in besonders vorteilhafter Weise die Durchmischung des Abgases. Dies ist insbesondere darauf zurückzuführen, dass der aus der mindestens einen seitlichen Öffnung austretende zweite Abgasteilstrom eine Strömungsrichtung hat, die im Wesentlichen in radialer Richtung nach außen in Richtung des Gehäuses und insbesondere zumindest teilweise in Richtung der zweiten Stirnseite gerichtet ist. Der aus dem Austrittsbereich in den Umlenkbereich ausgetretene zweite Abgasteilstrom weist insbesondere eine Strömungsrichtung auf, die im Wesentlichen in Richtung hin zum Rückströmbereich gerichtet ist. Damit werden hier erste und zweite Abgasteilströme erzeugt, die im Umlenkbereich zumindest teilweise Strömung aufweisen, die einander entgegengesetzt gerichtet sind, so dass eine verbesserte Durchmischung des Abgases erreicht wird. An den Umlenkbereich schließt sich radial außerhalb des konzentrisch angeordneten Rohrs der Rückströmbereich an, der zwischen Rohr und Gehäuse angeordnet ist und den Hinströmbereich umgibt. Durch diesen Rückströmbereich strömt das wieder vereinte Abgas aus erstem Abgasteilstrom und zweitem Abgasteilstrom, insbesondere in entgegen gesetzter Richtung, zum Abgas im Hinströmbereich. Nach Durchströmen des Rückströmbereichs tritt das Abgas aus der Abgasbehandlungseinheit aus, wobei hier insbesondere erneut eine Umlenkung des Abgases in eine gemeinsame Abgasleitung erfolgt.

Gemäß einer besonders vorteilhaften Ausgestaltung der Abgasbehandlungseinheit ist die Zugabe eines Reaktionsmittels insbesondere außerhalb der Abgasbehandlungseinheit angeordnet und zwar in einem Bereich der Abgasleitung, der stromaufwärts von dem Hinströmbereich angeordnet ist. Entsprechend wird das Reaktionsmittel mit dem Abgas durch den Hinströmbereich geführt, wobei die wesentliche Vermischung des Reaktionsmittels mit dem Abgas dann im Umlenkbereich durch die Kollision des mindestens einen ersten Abgasteilstroms und des mindestens einen zweiten Abgasteilstroms erfolgt.

Insbesondere ist im Hinströmbereich bereits eine erste Abgasbehandlungseinrichtung angeordnet, z. B. ein Hydrolysekatalysator, der eine Umwandlung des zugegebenen Reaktionsmittels, z. B. eines Reduktionsmittelvorläufers, bewirkt. Nachdem das Abgas diese Abgasbehandlungseinrichtung durchströmt hat, liegt insbesondere ein Reduktionsmittel vor (z. B. Ammoniak), das erst danach im Umlenkbereich gleichmäßig im Abgas verteilt wird. Durch diese gleichmäßige Verteilung des Reduktionsmittels im Umlenkbereich kann eine insbesondere im Rückströmbereich angeordnete Abgasbehandlungsvorrichtung (z. B. ein SCR-Katalysator) gleichmäßig mit dem Reaktionsmittel beaufschlagt werden, so dass eine Umsetzung der Schadstoffe in allen Bereichen der Abgasbehandlungsvorrichtung erfolgt.

Gemäß einer weiteren vorteilhaften Ausgestaltung kann die Zugabe eines Reaktionsmittels aber auch im Hinströmbereich der Abgasbehandlungseinheit selbst erfolgen, und/oder im Umlenkbereich, und/oder im Austrittsbereich der Abgasbehandlungseinheit. Dazu kann eine Zugabeeinheit für das Reaktionsmittel insbesondere im Bereich der zweiten Stirnseite angeordnet sein.

Insbesondere kann durch eine derartige Abgasbehandlungseinheit eine besonders effiziente Vermischung des Abgases erfolgen bei gleichzeitig geringem Bauvolumen der Abgasbehandlungseinheit. Die durchströmbaren Querschnittsflächen des Hinströmbereichs und des Rückströmbereichs entsprechen bevorzugt einander im Wesentlichen. Die zwischen Hinströmbereich und Rückströmbereich angeordnete Trennfläche wird insbesondere durch ein Rohr gebildet, das eine Wanddicke von 0,2 bis 3 mm aufweist. Die Vermischung des Abgases erfolgt insbesondere im Umlenkbereich der Abgasbehandlungseinheit, so dass das Abgas bereits vor dem Eintritt in den Rückströmbereich ausreichend vermischt ist. Somit kann das vermischte Abgas (insbesondere vermischt mit einem Reaktionsmittel) dann in den Rückströmbereich eintreten, in dem insbesondere weitere Abgabehandlungsvorrichtungen angeordnet sind. Die Baugröße der Abgasbehandlungseinheit ist also insbesondere nur durch die Durchströmungsquerschnitte des Hinströmbereichs und des Rückströmbereichs definiert, da die Wanddicke des Rohrs bzw. der den Hinströmbereich umgebenden Wandung und die Dicke des Gehäuses vernachlässigbar sind. Eine die Baugröße der Abgasbehandlungseinheit stark vergrößernde Anordnung einer zumindest teilweise radial durchströmbaren Abgasbehandlungsvorrichtung ist hier nicht erforderlich und nicht vorgesehen. Der Innendurchmesser des Hinströmbereichs bzw. der Innendurchmesser des Rohrs beträgt insbesondere 75 mm bis 200 mm, wobei der Innendurchmesser des Rückströmbereichs, also des Gehäuses, insbesondere 300 mm bis 600 mm beträgt. Damit sind insbesondere Abgasmassenströme von 1.500 bis 6.000 kg/Std. behandelbar bzw. umsetzbar. Die Höhe des Umlenkbereichs, das heißt der Abstand von zweiter Stirnseite zum Beginn des Rückströmbereichs, beträgt insbesondere dem 0,5-fachen bis 1-fachen des Innendurchmessers des Rückströmbereichs bzw. des Innendurchmessers des Gehäuses.

Bei der erfindungsgemäßen Abgasbehandlungseinheit weist die mindestens eine Öffnung mindestens ein Leitelement auf, das den mindestens einen zweiten Abgasteilstrom aus dem Hinströmbereich bzw. dem Rohr in den Umlenkbereich umlenkt.

Insbesondere erstreckt sich das mindestens eine Leitelement in den Hinströmbereich bzw. in das Rohr hinein.

Bevorzugt ist auch, dass das mindestens eine Leitelement mit einer Wandung des Hinströmbereichs bzw. des Rohrs gebildet.

Gemäß einer bevorzugten Ausgestaltung ist das Leitelement selbst Bestandteil des Hinströmbereichs bzw. des Rohrs und wird z. B. durch Ausstanzen und Umbiegen aus der Rohrwandung selbst herausgebildet. Insbesondere ist das Leitelement nur mit der stromabwärts liegenden Begrenzung der Öffnung verbunden. D.h. insbesondere, dass das Leitelement durch ein teilweises Trennen von der Wandung des Hinströmbereichs und nachfolgendes Umbiegen gebildet wird, so dass stromaufwärts des Leitelements die Öffnung bereitgestellt wird. Somit trifft das Abgas auf das Leitelement und wird durch das Leitelement in den Umlenkbereich umgelenkt.

Insbesondere ist eine Mehrzahl von Öffnungen auf einer einzigen Höhe, gesehen von der zweiten Stirnseite des Gehäuses aus, angeordnet. Gegebenenfalls ist eine Mehrzahl von Öffnungen auf mehreren unterschiedlichen Höhen, gesehen von der zweiten Stirnseite des Gehäuses aus, angeordnet, so dass zweite Teilabgasströme stromabwärts voneinander in den Umlenkbereich einströmen. Bevorzugt sind die Öffnungen rotationssymmetrisch um die Rohrachse angeordnet. Die Öffnungen weisen insbesondere eine Öffnungs-Querschnittsfläche auf, durch die der zweite Abgasteilstrom hindurchströmt.

Insbesondere weist die mindestens eine Öffnung eine Öffnungs-Querschnittsfläche von mindestens 150 % einer Rohr-(Hinströmbereichs-) Querschnittsfläche auf. Die Gesamtöffnungs-Querschnittsfläche aller Öffnungen beträgt insbesondere mindestens 200 % der Rohr-Querschnittsfläche, bevorzugt weniger als 220 % der Rohr-Querschnittsfläche.

Gemäß einer weiteren bevorzugten Ausgestaltung kontaktiert das Rohr die zweite Stirnseite, wobei mindestens ein seitlicher Auslass den Austrittsbereich bildet. Der erste Abgasteilstrom durchtritt den seitlichen Auslass und strömt damit vom Hinströmbereich ein in den Umlenkbereich. Insbesondere wird der mindestens eine seitliche Auslass ebenfalls durch Ausstanzungen im Rohr gebildet. Bei dieser Ausgestaltung der Abgasbehandlungseinheit kann das Rohr an der zweiten Stirnseite befestigt werden, so dass eine besonders steife Anordnung der Abgasbehandlungseinheit gewährleistet werden kann. Insbesondere grenzt der mindestens eine Auslass unmittelbar an die zweite Stirnseite an. Bevorzugt weist der mindestens eine Auslass kein Leitelement auf. Das Abgas des ersten Abgasteilstroms wird insbesondere durch eine besondere Gestaltung der zweiten Stirnseite so umgelenkt, dass das Abgas nun im Wesentlichen in Richtung des Rückströmbereiches strömt.

Gemäß einer bevorzugten Ausgestaltung ist die zweite Stirnseite geschlossen ausgeführt, so dass insbesondere kein weiterer Abgasteilstrom durch die zweite Stirnseite in die Abgasbehandlungseinheit einströmt.

Gemäß einer besonderen Ausgestaltung der Abgasbehandlungseinheit kann in bzw. an der zweiten Stirnseite eine Dosiereinheit für ein Reaktionsmittel vorgesehen sein, die ein Reaktionsmittel unmittelbar in den Umlenkbereich oder in den Hinströmbereich zugibt.

Die Durchmischung des Abgases erfolgt also insbesondere ausschließlich durch die Kollision von (mindestens einen) erstem Abgasteilstrom und (mindestens einen) zweitem Abgasteilstrom im Umlenkbereich.

Die Erfindung ist weiterhin auf ein Verfahren zur Vermischung eines Abgases in einer Abgasbehandlungseinheit gerichtet, das zumindest die folgenden Schritte aufweist:
a) Zentrales Zuführen eines Abgases durch einen Hinströmbereich,
b) Aufteilen des Abgases in mindestens einen ersten Abgasteilstrom und mindestens einen zweiten Abgasteilstrom,
c) Umlenken der Abgasteilströme, wobei der mindestens eine erste Abgasteilstrom aus einem Austrittsbereich des Hinströmbereiches in einen Umlenkbereich hineinströmt und dort erneut umgelenkt wird, wobei der mindestens eine zweite Abgasteilstrom aus mindestens einer stromaufwärts des Austrittsbereichs angeordneten Öffnung in den Umlenkbereich hineinströmt, wobei die mindestens eine Öffnung mindestens ein Leitelement aufweist, das den mindestens einen zweiten Abgasteilstrom in den Umlenkbereich umlenkt:
d) Kollision und Vermischung des mindestens einen ersten Abgasteilstroms mit dem mindestens einen zweiten Abgasteilstrom in dem Umlenkbereich, und
e) Weiterleiten des ersten Abgasteilstromes und des zweiten Abgasteilstromes gemeinsam durch einen Rückströmbereich.

Insbesondere wird auf die Ausführungen zu der erfindungsgemäßen Abgasbehandlungseinheit Bezug genommen, die ausdrücklich auch auf das Verfahren anwendbar sind.

Gemäß einer besonders vorteilhaften Weiterentwicklung des Verfahrens bilden mindestens 30 % und höchstens 60 % des Abgases den zweiten Abgasteilstrom.

Es wird weiterhin ein Fahrzeug mit zumindest einer Verbrennungskraft-maschine, einer Abgasleitung und einer erfindungsgemäßen Abgasbehandlungseinheit vorgeschlagen oder mit einer Abgasbehandlungseinheit, die durch ein erfindungsgemäßes Verfahren betreibbar ist.

Die Abgasbehandlungseinheit ist insbesondere auch für Kraftfahrzeuge, Eisenbahnen, Wasserfahrzeuge oder Flugzeuge einsetzbar, da auch hier hohe Anforderungen an eine kompakte Bauform bzw. Schadstoffumwandlung bestehen.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Es zeigen schematisch:
- Fig. 1:: eine Abgasbehandlungseinheit in einer ersten (nicht erfindungsgemäßen) Ausführungsform;
- Fig. 2:: die Abgasbehandlungseinheit nach Fig. 1 im Querschnitt;
- Fig. 3:: eine Abgasbehandlungseinheit in einer zweiten Ausführungsform; und
- Fig. 4:: ein Fahrzeug.

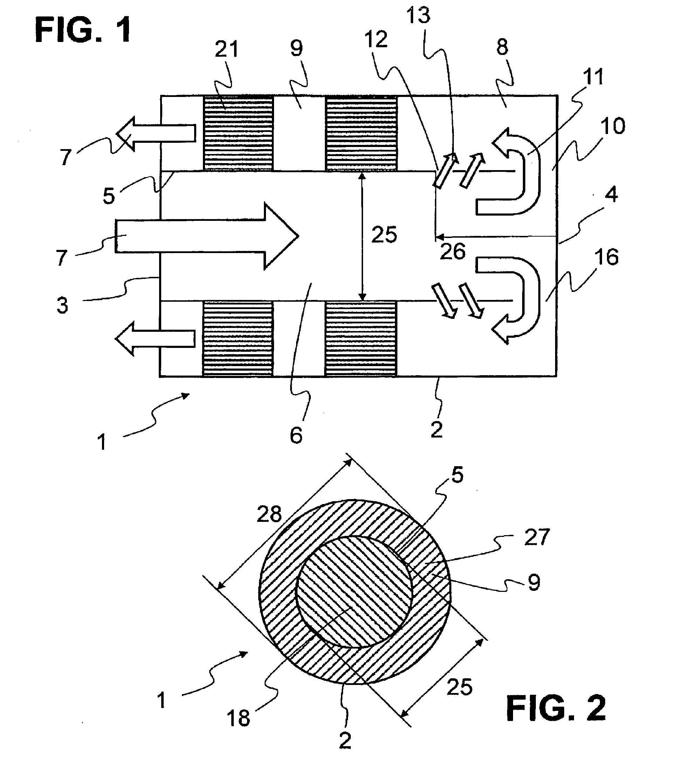

Fig. 1 zeigt eine Abgasbehandlungseinheit 1 gemäß einer ersten (nicht erfindungssemäßen) Ausführungsform. Die Abgasbehandlungseinheit 1 wird gebildet durch ein Gehäuse 2 und ein konzentrisch im Gehäuse 2 angeordnetes Rohr 5, das den Hinströmbereich 6 für ein Abgas 7 bildet. Das Abgas 7 tritt in das Gehäuse 2 über eine erste Stirnseite 3 ein. Das Rohr 5 ist entsprechend offen zu der ersten Stirnseite 3 des Gehäuses 2, so dass das hier eingetretene Abgas 7 in Richtung einer zweiten Stirnseite 4 das Rohr 5 durchströmt. Das Rohr 5 bzw. der Hinströmbereich 6 weist einen Rohr-Innendurchmesser 25 auf. Die zweite Stirnseite 4 ist geschlossen ausgeführt, so dass das Abgas 7 hier umgelenkt wird. Im stromabwärts liegenden Teil des Rohrs 5 wird das Abgas 7 aufgeteilt in einen ersten Abgasteilstrom 11 und mehrere zweite Abgasteilströme 13. Der erste Abgasteilstrom 11 verlässt das Rohr 5 durch einen Austrittsbereich 10, der benachbart zur zweiten Stirnseite 4 des Gehäuses 2 angeordnet ist. Der erste Abgasteilstrom 11 tritt somit durch den Austrittsbereich 10 in den Umlenkbereich 8 ein, durch den das Abgas 7 in eine Strömungsrichtung umgelenkt wird, die im Wesentlichen der Strömungsrichtung im Hinströmbereich 6 entgegengesetzt ist. Statt nun unmittelbar in den Rückströmbereich 9 einzutreten, erfolgt in der Abgasbehandlungseinheit 1 erfindungsgemäße Trennung des Abgasstroms im Hinströmbereich 6. Die zweiten Abgasteilströme 13 treten (im Hinströmbereich 6) stromaufwärts des Austrittsbereichs 10 durch Öffnungen 12 in den Umlenkbereich 8 ein. Im Umlenkbereich 8 kollidiert der erste Abgasteilstrom 11 mit den im Wesentlichen quer dazu einströmenden zweiten Abgasteilströmen 13. Durch die Kollision dieser Abgasteilströme 11, 13 erfolgt eine umfangreiche Vermischung des Abgases 7. Hier sind Öffnungen 12 auf mehreren Höhen 26, ausgehend von der zweiten Stirnseite 4, angeordnet. Erst nach dieser Kollision der Abgasteilströme 11, 13 tritt das nun vereinte (und vermischte) Abgas 7 in den Rückströmbereich 9 ein. Im Rückströmbereich 9 sind Abgasbehandlungsvorrichtungen 21 angeordnet, die nacheinander z. B. einen Hydrolysekatalysator und einen SCR-Katalysator aufweisen können. Weiterhin oder alternativ können Speicherelemente, Heizkatalysatoren, Partikelfilter, Partikelagglomeratoren in bekannter Anordnung eingesetzt werden. Das Abgas 7 strömt aus dem Rückströmbereich 9 aus und verlässt das Gehäuse 2 der Abgasbehandlungseinheit 1.

Fig. 2 zeigt schematisch die Abgasbehandlungseinheit 1 nach Fig. 1 im Querschnitt. Die Abgasbehandlungseinheit 1 weist ein Gehäuse 2 mit einem Gehäuse-Innendurchmesser 28 und ein konzentrisch angeordnetes Rohr 5 mit einem Rohr-Innendurchmesser 25 auf. Das Rohr 5 hat eine für das Abgas durchströmbare Rohr-Querschnittsfläche 18. Der Rückströmbereich 9 hat eine für das Abgas durchströmbare Rückströmbereichs-Querschnittfläche 27.

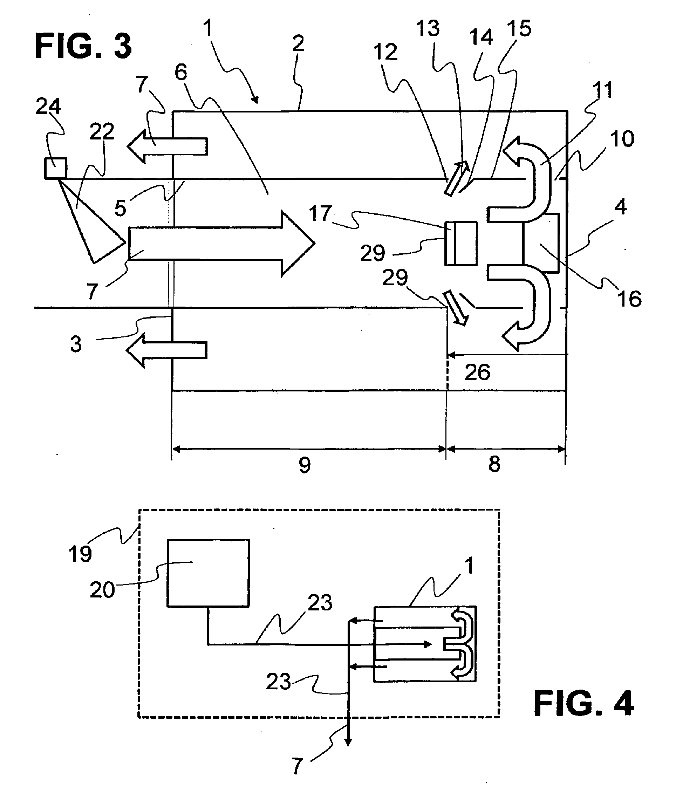

Fig. 3 zeigt schematisch eine zweite Ausführungsform der Abgasbehandlungseinheit 1. Das Rohr 5 des Hinströmbereichs 6 erstreckt sich hier durch die erste Stirnseite 3 des Gehäuses 2. Eine Dosiereinrichtung 24 ist am Rohr 5 vorgesehen, die ein Reaktionsmittel 22 zu dem Abgasstrom 7 hinzugibt. Das Abgas 7 verlässt den Hinströmbereich 6 als erster Abgasteilstrom 11 durch mehrere Auslässe 16 im Austrittsbereich 10 oder als erster Abgasteilstrom 11 durch Öffnungen 12. Die Öffnungen 12 weisen hier Leitelemente 14 auf, die sich nach innen in das Rohr 5 hinein erstrecken und eine Umlenkung des zweiten Abgasteilstroms 13 bewirken. Die Leitelemente 14 werden hier durch die Wandung 15 des Rohrs 5 gebildet. Die Öffnung 12 weist eine Öffnungs-Querschnittsfläche 17 auf, die durch die Schraffur in der Öffnung 12 in der Rückwand des Rohrs 5 verdeutlicht ist. Das Abgas 7 aus erstem Abgasteilstrom 11 und zweitem Abgasteilstrom 13 tritt über Öffnungen 12 bzw. über Auslässe 16 in den Umlenkbereich 8 ein, der sich von der zweiten Stirnseite 4 bis zu einer Höhe 26 zum Rückströmbereich 9 hin erstreckt. Die Höhe 26 erstreckt sich bis zur, von der zweiten Stirnseite 4 am weitesten entfernten Begrenzung 29 der Öffnung 12, die am weitesten stromaufwärts im Hinströmbereich 6 angeordnet ist. Der Rückströmbereich 9 schließt sich an den Umlenkbereich 8 an und umgibt den Hinströmbereich 6.

Fig. 4 zeigt schematisch ein Fahrzeug 19 mit einer Verbrennungskraftmaschine 20. Eine Abgasleitung 23 führt das Abgas 7 von der Verbrennumgskraftmaschine 20 durch eine Abgasbehandlungseinheit 1 an die Umgebung.

### Bezugszeichenliste

- 1: Abgasbehandlungseinheit
- 2: Gehäuse
- 3: Erste Stirnseite
- 4: Zweite Stirnseite
- 5: Rohr
- 6: Hinströmbereich
- 7: Abgas
- 8: Umlenkbereich
- 9: Rückströmbereich
- 10: Austrittsbereich
- 11: Erster Abgasteilstrom
- 12: Öffnung
- 13: Zweiter Abgasteilstrom
- 14: Leitelement
- 15: Wandung
- 16: Auslass
- 17: Öffnungs-Querschnittsfläche
- 18: Rohr-Querschnittsfläche
- 19: Fahrzeug
- 20: Verbrennungskraftmaschine
- 21: Abgasbehandlungsvorrichtung
- 22: Reaktionsmittel
- 23: Abgasleitung
- 24: Dosierrichtung
- 25: Rohr-Innendurchmesser
- 26: Höhe
- 27: Rückströmbereichs-Querschnittsfläche
- 28: Gehäuse-Innendurchmesser
- 29: Begrenzung

## Patentansprüche

1. Abgasbehandlungseinheit (1) zumindest aufweisend ein Gehäuse (2) mit einer ersten Stirnseite (3) und einer gegenüberliegend angeordneten zweiten Stirnseite (4), ein sich von der ersten Stirnseite (3) zur zweiten Stirnseite (4) erstreckendes Rohr (5) als Hinströmbereich (6) für ein Abgas (7), einen Umlenkbereich (8) im Bereich der zweiten Stirnseite (4) für das Abgas (7) und einen sich zwischen Rohr (5) und Gehäuse (2) erstreckenden Rückströmbereich (9), wobei das Rohr (5) benachbart zur zweiten Stirnseite (4) einen Austrittsbereich (10) aufweist, aus dem ein erster Abgasteilstrom (11) in den Umlenkbereich (8) strömt, **dadurch gekennzeichnet, dass** das Rohr (5) im Umlenkbereich (8) und stromaufwärts des Austrittsbereichs (10) mindestens eine seitliche Öffnung (12) aufweist, so dass der erste Abgasteilstrom (11) im Umlenkbereich (8) mit mindestens einem aus der mindestens einen Öffnung (12) strömenden zweiten Abgasteilstrom (13) kollidiert, wobei die mindestens eine Öffnung (12) mindestens ein Leitelement (14) aufweist, das den mindestens einen zweiten Abgasteilstrom (13) aus dem Rohr (5) in den Umlenkbereich (8) umlenkt.

2. Abgasbehandlungseinheit (1) gemäß Patentanspruch 1, wobei sich das mindestens eine Leitelement (14) in das Rohr (5) hinein erstreckt.

3. Abgasbehandlungseinheit (1) gemäß Patentanspruch 1 oder 2, wobei das mindestens eine Leitelement (14) mit einer Wandung (15) des Rohrs (5) gebildet ist.

4. Abgasbehandlungseinheit (1) gemäß einem der vorhergehenden Patentansprüche, wobei das Rohr (5) die zweite Stirnseite (4) kontaktiert und mindestens ein seitlicher Auslass (16) den Austrittsbereich (10) bildet.

5. Abgasbehandlungseinheit (1) gemäß Patentanspruch 4, wobei der mindestens eine Auslass (16) unmittelbar an die zweite Stirnseite (4) angrenzt.

6. Abgasbehandlungseinheit (1) gemäß einem der vorhergehenden Patentansprüche, wobei die mindestens eine Öffnung (12) eine Öffnungs-Querschnittsfläche (17) von mindestens 150 % einer Rohr-Querschnittsfläche (18) aufweist.

7. Verfahren zur Vermischung eines Abgases (7) in einer Abgasbehandlungseinheit (1), zumindest aufweisend die folgenden Schritte:
a) zentrales Zuführen eines Abgases (7) durch einen Hinströmbereich (6),
b) Aufteilen des Abgases (7) in mindestens einen ersten Abgasteilstrom (11) und mindestens einen zweiten Abgasteilstrom (13),
c) Umlenken der Abgasteilströme (11, 13), wobei der mindestens eine erste Abgasteilstrom (11) aus einem Austrittsbereich (10) des Hinströmbereiches (6) in einen Umlenkbereich (8) hineinströmt und dort erneut umgelenkt wird, wobei der mindestens eine zweite Abgasteilstrom (13) aus mindestens einer stromaufwärts des Austrittsbereichs (10) angeordneten Öffnung (12) in den Umlenkbereich (8) hineinströmt; wobei die mindestens eine Öffnung (12) mindestens ein Leitelement (14) aufweiset, das den mindestens einen zweiten Abgasteilstrom (13) in den Umlenkbereich (8) umlenkt,
d) Kollision und Vermischung des ersten Abgasteilstroms (11) mit dem zweiten Abgasteilstrom (13) in dem Umlenkbereich (8), und
e) Weiterleiten des ersten Abgasteilstromes (11) und des zweiten Abgasteilstromes (13) gemeinsam durch einen Rückströmbereich (9).

8. Verfahren gemäß Patentanspruch 7, wobei mindestens 30 % des Abgases (7) den zweiten Abgasteilstrom (13) bilden.

9. Fahrzeug (18) mit zumindest einer Verbrennungskraftmaschine (19), einer Abgasleitung (23) und einer Abgasbehandlungseinheit (1) gemäß einem der Patentansprüche 1 bis 6 oder betreibbar durch ein Verfahren gemäß einem der Patentansprüche 7 oder 8.

## Claims

1. Exhaust gas treatment unit (1) at least having a housing (2) with a first end (3) and a second end (4) arranged opposite, having a tube (5) extending from the first end (3) to the second end (4) as an inflow region (6) for an exhaust gas (7), having a deflecting region (8) in the region of the second end (4) for the exhaust gas (7), and having a return flow region (9) extending between the tube (5) and the housing (2), wherein, adjacent to the second end (4), the tube (5) has an outlet region (10), from which a first partial exhaust gas flow (11) flows into the deflecting region (8), **characterized in that** the tube (5) has at least one lateral opening (12) in the deflecting region (8) and upstream of the outlet region (10), with the result that the first partial exhaust gas flow (11) collides in the deflecting region (8) with at least one second partial exhaust gas flow (13) flowing out of the at least one opening (12), wherein the at least one opening (12) has at least one baffle element (14), which deflects the at least one second partial exhaust gas flow (13) out of the tube (5) and into the deflecting region (8).

2. Exhaust gas treatment unit (1) as claimed in claim 1, wherein the at least one baffle element (14) extends into the tube (5).

3. Exhaust gas treatment unit (1) as claimed in claim 1 or 2, wherein the at least one baffle element (14) is formed by means of a wall (15) of the tube (5).

4. Exhaust gas treatment unit (1) as claimed in one of the preceding claims, wherein the tube (5) makes contact with the second end (4), and at least one lateral outlet (16) forms the outlet region (10).

5. Exhaust gas treatment unit (1) as claimed in claim 4, wherein the at least one outlet (16) directly adjoins the second end (4).

6. Exhaust gas treatment unit (1) as claimed in one of the preceding claims, wherein the at least one opening (12) has an opening cross-sectional area (17) of at least 150% of a tube cross-sectional area (18).

7. Method for mixing an exhaust gas (7) in an exhaust gas treatment unit (1), at least having the following steps:
a) central supply of an exhaust gas (7) through an inflow region (6),
b) division of the exhaust gas (7) into at least one first partial exhaust gas flow (11) and at least one second partial exhaust gas flow (13),
c) deflection of the partial exhaust gas flows (11, 13), wherein the at least one first partial exhaust gas flow (11) flows out of an outlet region (10) of the inflow region (6) and into a deflecting region (8) and is deflected again there, wherein the at least one second partial exhaust gas flow (13) flows into the deflecting region (8) from at least one opening (12) arranged upstream of the outlet region (10); wherein the at least one opening (12) has at least one baffle element (14), which deflects the at least one second partial exhaust gas flow (13) out of the tube (5) and into the deflecting region (8),
d) collision and mixing of the first partial exhaust gas flow (11) with the second partial exhaust gas flow (13) in the deflecting region (8), and
e) joint onward transfer of the first partial exhaust gas flow (11) and of the second partial exhaust gas flow (13) through a return flow region (9).

8. Method as claimed in claim 7, wherein at least 30% of the exhaust gas (7) forms the second partial exhaust gas flow (13).

9. Vehicle (18) having at least one internal combustion engine (19), one exhaust line (23) and one exhaust gas treatment unit (1) as claimed in one of claims 1 to 6 or capable of being operated by means of a Method as claimed in one of claims 7 or 8.

## Revendications

1. Unité de traitement de gaz d'échappement (1) comprenant au moins un boîtier (2) pourvu d'un premier côté frontal (3) et d'un deuxième côté frontal (4) disposé en regard, un tuyau (5) s'étendant à partir du premier côté frontal (3) jusqu'au deuxième côté frontal (4) et faisant office de région d'afflux (6) pour un gaz d'échappement (7), une région de déviation (8) dans la région du deuxième côté frontal (4) pour le gaz d'échappement (7) et une région de reflux (9) s'étendant entre le tuyau (5) et le boîtier (2), le tuyau (5) comprenant, à proximité du deuxième côté frontal (4), une région de sortie (10) à partir de laquelle s'écoule un premier flux partiel de gaz d'échappement (11) dans la région de déviation (8), **caractérisée en ce que** le tuyau (5) comprend au moins une ouverture latérale (12) dans la région de déviation (8) et en amont de la région de sortie (10), de telle sorte que le premier flux partiel de gaz d'échappement (11) entre en collision dans la région de déviation (8) avec au moins un deuxième flux partiel de gaz d'échappement (13) s'écoulant à partir de l'au moins une ouverture (12), l'au moins une ouverture (12) comprenant au moins un élément de guidage (14) qui dévie l'au moins un deuxième flux partiel de gaz d'échappement (13) à partir du tuyau (5) dans la région de déviation (8).

2. Unité de traitement de gaz d'échappement (1) selon la revendication 1, dans laquelle l'au moins un élément de guidage (14) s'étend dans le tuyau (5).

3. Unité de traitement de gaz d'échappement (1) selon la revendication 1 ou 2, dans laquelle l'au moins un élément de guidage (14) est formé avec une paroi (15) du tuyau (5).

4. Unité de traitement de gaz d'échappement (1) selon l'une quelconque des revendications précédentes, dans laquelle le tuyau (5) est en contact avec le deuxième côté frontal (4) et au moins une sortie latérale (16) forme la région de sortie (10).

5. Unité de traitement de gaz d'échappement (1) selon la revendication 4, dans laquelle l'au moins une sortie (16) est immédiatement adjacente au deuxième côté frontal (4).

6. Unité de traitement de gaz d'échappement (1) selon l'une quelconque des revendications précédentes, dans laquelle l'au moins une ouverture (12) présente une surface de section transversale d'ouverture (17) d'au moins 150 % d'une surface de section transversale de tuyau (18).

7. Procédé de mélange de gaz d'échappement (7) dans une unité de traitement de gaz d'échappement (1), comprenant au moins les étapes suivantes :
a) amenée centrale d'un gaz d'échappement (7) à travers une région d'afflux (6),
b) division du gaz d'échappement (7) en au moins un premier flux partiel de gaz d'échappement (11) et au moins un deuxième flux partiel de gaz d'échappement (13),
c) déviation des flux partiels de gaz d'échappement (11, 13), l'au moins un premier flux partiel de gaz d'échappement (11) affluant à partir d'une région de sortie (10) de la région d'afflux (6) dans une région de déviation (8) et y étant de nouveau dévié, l'au moins un deuxième flux partiel de gaz d'échappement (13) affluant à partir d'au moins une ouverture (12) disposée en amont de la région de sortie (10) dans la région de déviation (8) ; l'au moins une ouverture (12) comprenant au moins un élément de guidage (14) qui dévie l'au moins un deuxième flux partiel de gaz d'échappement (13) dans la région de déviation (8),
d) entrée en collision et mélange du premier flux partiel de gaz d'échappement (11) avec le deuxième flux partiel de gaz d'échappement (13) dans la région de déviation (8), et
e) acheminement du premier flux partiel de gaz d'échappement (11) et du deuxième flux partiel de gaz d'échappement (13) ensemble à travers une région de reflux (9).

8. Procédé selon la revendication 7, dans lequel au moins 30 % du gaz d'échappement (7) forment ledit deuxième flux partiel de gaz d'échappement (13).

9. Véhicule (18) comprenant au moins un moteur à combustion interne (19), une conduite de gaz d'échappement (23) et une unité de traitement de gaz d'échappement (1) selon l'une quelconque des revendications 1 à 6 ou pouvant fonctionner au moyen d'un procédé selon l'une quelconque des revendications 7 ou 8.
